# EUROPEAN PATENT SPECIFICATION

(11) **EP 0 494 525 B1**
(45) Date of publication and mention of the grant of the patent: **19.02.1997**
(21) Application number: 91311708.1
(22) Date of filing: 17.12.1991
(51) Int. Cl.: H04M 1/57, H04M 1/66, H04M 1/72

(54) **Telephone apparatus with calling line identification**
Telefongerät mit Identifizierung der Rufleitung
Appareil téléphonique avec identification de la ligne appelante

(30) Priority: 11.01.1991 GB 9100611
(43) Date of publication of application: 15.07.1992
(73) Proprietor: NOKIA MOBILE PHONES (U.K.) LIMITED, Camberley, Surrey GU15 3SP (GB)
(72) Inventor: Martensson, Nils Erik Vilhelm, Woking, Surrey GU22 0QG (GB)
(74) Representative: Frain, Timothy John

(56) References cited:
- EP-A- 0 330 856
- EP-A- 0 347 155
- EP-A- 0 355 777
- DE-A- 2 933 477
- GB-A- 2 173 069
- US-A- 4 278 844
- PATENT ABSTRACTS OF JAPAN vol. 12, no. 174 (E-612)24 May 1988 & JP-A-62 281 552
- PATENT ABSTRACTS OF JAPAN vol. 9, no. 310 (E-364)(2033) 6 December 1985 & JP-A-60 146 563

## Description

This invention relates to a telephone apparatus adapted to respond to a signal conveying a number identifying the source of an incoming telephone call. Specifically the identifying number may be the telephone number of the telephone making the incoming call.

It is known, for example in the context of cellular radio telephone systems, for the subscriber number of the telephone from which a call is originated to be transmitted in binary code to the telephone receiving the call. This is known in the art as Calling Line Identification (CLI).

Prior art telephones have been adapted to respond to CLI signals and have been provided with a facility for displaying the telephone numbers of incoming calls. Hence the user can see the telephone number before answering the call and so the user can choose whether or not to answer the call. However, if the user chooses not to answer, the telephone will ring for as long as the caller persists with the call, and of course the caller will be aware that he has established a line and that the call has not been answered. A so-called 'call-in-absence' memory has also been provided for storing the telephone numbers of incoming calls which have not been answered within a predetermined period of time. The stored numbers can be recalled at a later time so that the user has a record of calls received but not answered.

GB-A-2014825 discloses a telephone apparatus in which the number of a caller is stored in a memory and can be recalled at a later stage if the call is not answered initially.

EP-A2-330856 discloses an automatic telephone answering device employing an Automatic Number Identification (ANI) decoder to selectively perform operations on a telephone call. The device may perform such operations as to selectively not respond, end, record or forward a telephone call wherein the selection is dependent upon the ANI signal associated with the telephone call, and the operations are determined prior to the reception of the telephone call.

EP-A2-355777 discloses a communication apparatus including a reception unit for receiving discrimination information for discriminating a calling party terminal equipment; a memory for storing the information received by the reception unit if no response is made to the call reception; and an output unit for visually outputting the information stored in the memory.

The present invention is defined in the appended claims.

In the present specification the term 'field' relates to a portion of memory intended for storing a specific item of data of a given type such as a telephone number (numeric characters only) or a name (alphabet or alphanumeric characters). A 'record' comprises a collection of individual fields linked by a common feature, e.g. all items of data (fields) relating to the same telephone number.

A telephone apparatus in accordance with the invention is advantageous in that a call made remotely from a particular number can be used to modify the operation of its local user-interface functions. For example, the power supply of the telephone can be switched off so as to prevent the use of all the user-interface functions until a correct code number i.e. a personal identification number (PIN), has been entered. Alternatively, the keypad can be changed to disable the keypad until such time as the keypad is re-enabled by entering predetermined sequence of keystrokes. These features can provide an added degree of security since the local user-interface functions of the telephone can be disabled remotely when the subscriber is away from the telephone and so prevent unauthorised use.

An embodiment of the invention will now be described, by way of example, with reference to the accompanying drawings, in which:-
Figure 1 is a perspective view of a portable cellular telephone in accordance with the invention,
Figure 2 is a schematic diagram of the main features in the telephone of Figure 1,
Figure 3 is a schematic diagram showing the structure and organisation of the telephone number store of the telephone in Figure 2,
Figure 4 is a schematic diagram of one of the records in the telephone number store in Figure 3, and
Figure 5 is a flowchart depicting a set of steps, which may be used by the microcomputer in the telephone in Figure 2 insofar as implementation of the telephone number store is concerned.

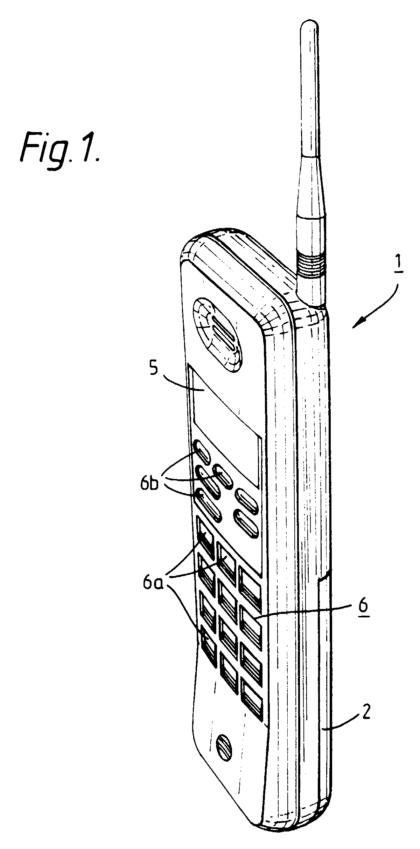

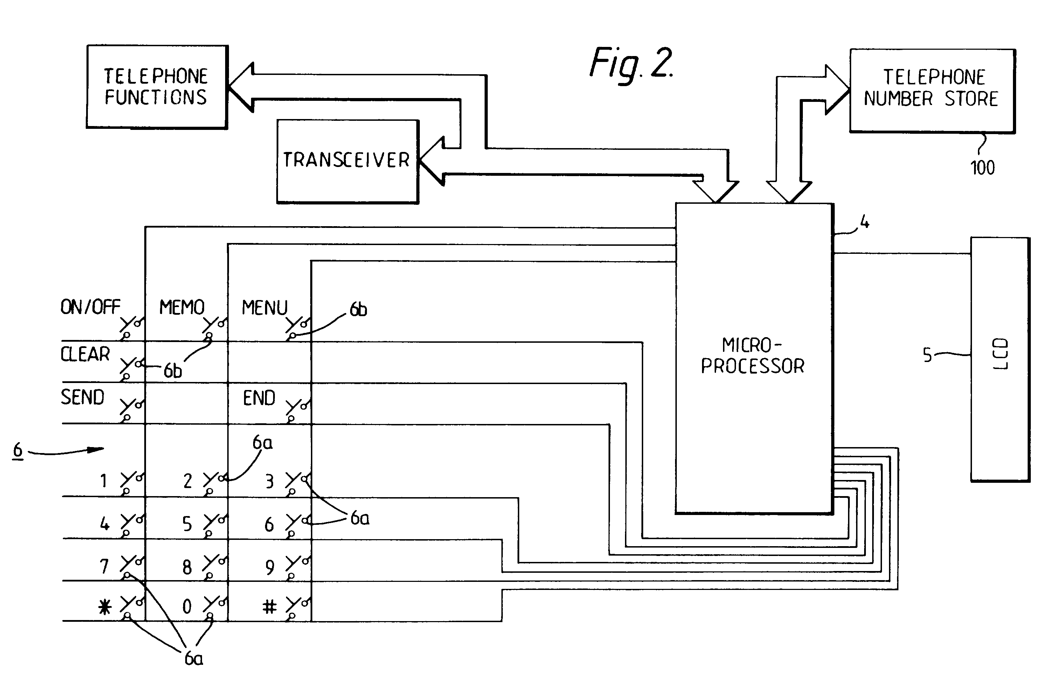

The telephone apparatus shown in Figure 1 is a portable cellular telephone 1 powered by a rechargeable battery pack 2. The telephone 1 includes a transceiver and all the other features conventionally found in a cellular telephone, as shown schematically in Figure 2. Since these aspects of the telephone are not directly relevant to the instant invention no further details will be given here, except to say that a microprocessor 4 (see Figure 2) is employed to control all the basic functions of the telephone 1 and to control the keypad and display functions. Alternatively, however, the telephone functions may be controlled by a master microcomputer, while the keypad and display functions are under the control of a separate slave microcomputer coupled to communicate with the master microcomputer. Additionally a memory 100 is provided for storing subscriber telephone numbers, as described in more detail below.

The user-interface of telephone 1 comprises a display, e.g. a liquid crystal display 5, itself well-known in the art and a keypad 6 on the front of the telephone 1. The display is coupled to and regulated by the microprocessor 4 in the usual manner. The keypad 6 essentially comprises two main sets of keys, namely alphanumeric keys 6a associated with alphanumeric data especially for dialing telephone numbers, but also for entering alphanumeric data into the telephone number store 100; and a set of function keys 6b for enabling various predetermined functions or operations.

The keys 6a are arranged in four rows of three keys each. As is conventional for the numeric key layout of a telephone, the top row comprises keys for numbers 1, 2 and 3 respectively, the second row down for numbers 4, 5 and 6 respectively, the next row down for numbers 7, 8 and 9 respectively, and the bottom row for *, 0 and # respectively. The keys 6a are also associated with alphabet information, as again is quite conventional. The alphabetic rather than numeric data is selected for example by preceding the alphanumeric keystroke with another predetermined keystroke or set of keystrokes, specifically using the function keys in the data entry mode as discussed in more detail below.

As is usual in cellular telephones, the keys 6b include a "SEND" and "END" key for respectively initiating and terminating a telephone call. Another key, specifically located in the top left-hand corner is an "ON/OFF" key for turning the telephone on and off, i.e. by connecting and disconnecting the battery pack power supply. Another of the function keys may be a menu or function key labeled, for example, "MENU" or "FUNCTION" or with a suitable abbreviation thereof. Depression of this key enables a variety of pre-set menus, the related instructions of which are stored in memory, to be viewed and selectively enabled. The various menus are selected by depressing the appropriate alphanumeric keys after depressing the "MENU" or "FUNCTION" key. The relevant menu is shown to the user in words or abbreviations on the display panel 5. For example, the user may be able to select the ringing tone by appropriate menu selection.

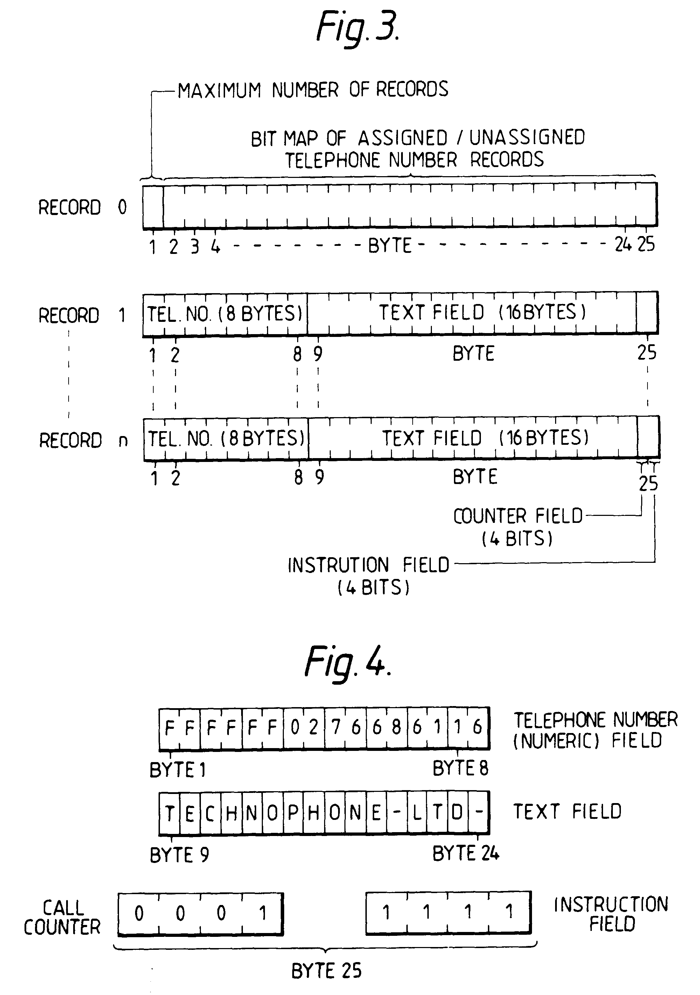

The organisation of the memory, suitably an EEPROM, constituting the telephone number store 100 will now be described with reference to Figure 3.

The telephone number store comprises n+1 records, each record having a length of 25 bytes (200 bits). Record 0 is merely an information record and contains information on the size and allocation of the telephone number store. This record is the first in the memory 100 and constitutes record number 0, i.e. abbreviated subscriber number 0. The header, like the n other records, has a length of 25 bytes and is structured as follows. The first byte is used to store the maximum number of records in the telephone number store, and the remaining 24 bytes are used as a bit map to indicate unassigned and assigned records. For example a binary "1" indicates an unassigned record and binary "0" indicates an assigned record. To this end the first telephone number record (Record 1) is represented by the most significant bit (bit 8) in byte 2 (i.e. abbreviated subscriber number 1), whilst the last subscriber number record (maximum 192) is represented by the least significant bit (bit 1) in byte 25 of the header.

The n subscriber number records each consist of a numeric field 8 bytes long for storing the directory number; a text field, which is 16 bytes long, for storing any accompanying optional text, such as the name of the subscriber; a counter field 4 bits (½ byte) long; and an instruction field also 4 bits (½ byte) long.

The subscriber number is stored right-justified in the "numeric" field (bytes 1 to 8) and filled to the left with "F" (in hexadecimal), as shown in Figure 4 for the telephone number 0276 686116. In the case of an empty or deleted subscriber number record, the numeric field (bytes 1 to 8) is filled with F's (hexadecimal).

The text is stored left-justified in the text field (bytes 9 to 24) and filled to the right with spaces, ASCII code "20" (hexadecimal), as shown in Figure 4 for the words "TECHNOPHONE LTD". In the case of an empty or deleted record, the text field (bytes 9 to 24) is filled with ASCII code spaces "20" (hexadecimal).

The counter field (the four most significant bits of byte 25) stores the number of times a call has been received from the telephone number contained in that record. So, for example, as shown in Figure 4 a call has been received from the telephone number 0276 686116 once before.

The instruction field (the four least significant bits of byte 25) are available for storing special instructions to modify the manual operation of the telephone. If this field is empty (0000) the operation of the telephone will proceed uninterrupted in the normal manner. However, special instructions may be programmed into this field by the user from the keyboard. For example, in Figure 4 the code 1111 is used as a "TELEPHONE BUSY" instruction which can be used to block calls from selected telephone numbers, as described in more detail below.

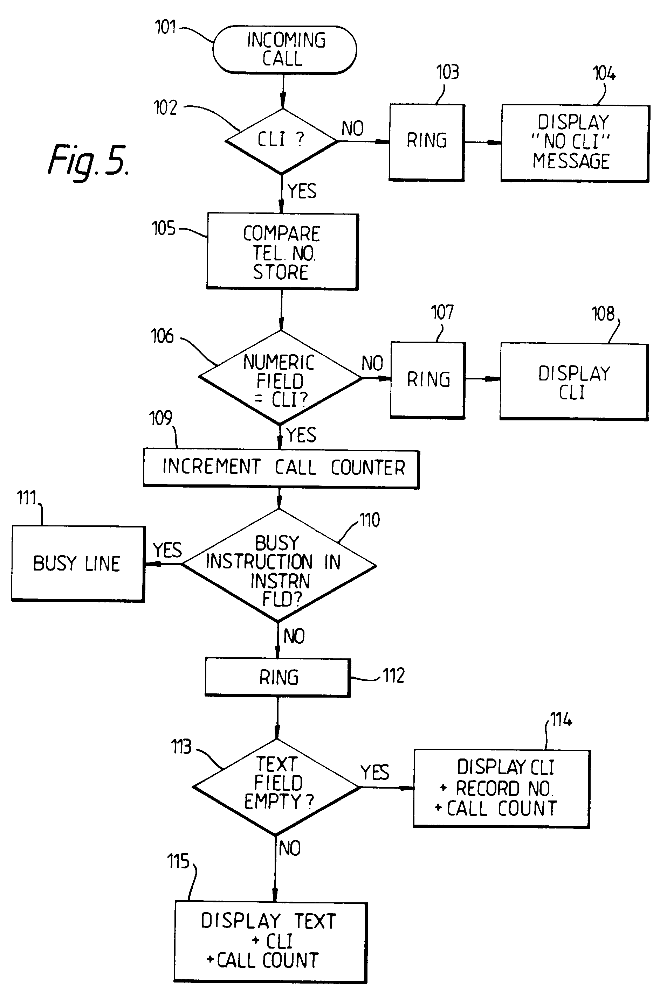

Figure 5 is a flowchart which may be used to implement the operation of the microprocessor 4 of Figure 2 insofar as use of the telephone number store 100 is concerned. The flowchart begins at block 101 when the portable telephone receives an incoming call. At block 102 the telephone establishes the telephone number of the caller if a calling line identification (CLI) signal is present. If there is no CLI signal the flow proceeds to block 103 where the telephone is rung and the call will proceed in the conventional manner. Also, as indicated at block 104, the telephone may display a message such as "NO CLI" to indicate that no CLI information is available.

On the other hand, if a CLI signal is present, the telephone number will be established in known manner and the flow will proceed from block 102 to block 105. The telephone numbers stored in the numeric fields of the telephone number store 100 are compared with the CLI number. If none of the stored numbers match the CLI number, see block 106, the flow proceeds to block 107. The telephone is rung and the CLI number is displayed on the display, as illustrated at block 108. Additionally a message such as "NOT IN MEMORY" may be displayed to indicate to the user that the number of the incoming calls is not stored in memory 100.

The CLI number may remain on the display for reference purposes even after the call has been answered and the user may have the opportunity to permanently transfer the displayed number into the telephone number store 100 while the call is in progress. To this end, e.g. by pressing any of the alphanumeric keys 6a, the message on the display changes, for example to "STORE?". At this point the user can confirm that he wishes to store the displayed number by pressing a "STORE" key disposed among the keys 6b. In response the display 5 will show the first available record or memory location. The user may store the number at that or indeed at any other available location of his choice, and also store text to accompany the telephone number, e.g. the caller's name, in accordance with the general procedure for entering data as discussed in greater detail below. If the user does not press the "STORE" key while the "STORE?" message is displayed the CLI number will not be transferred into the telephone number store 100.

On the other hand, if one of the records in the telephone number store 100 is found at block 106 to contain in its numeric field a number corresponding to the CLI, then the counter field of that record will be incremented by one unit as shown at block 109. Thus if the current state of the call counter was 0001 for the selected record as shown in Figure 4, the counter would be incremented to 0010.

Flow then proceeds to block 110 at which a check is made on the state of the instruction field. If this contains a "BUSY SIGNAL" instruction, e.g. 1111, then the telephone will respond with a busy (engaged) signal, indicated at block 111, as if the telephone were in use. Hence the telephone has a call screening facility, which permits calls from selected telephone numbers to be blocked. The caller will receive a busy or engaged tone.

If, at block 110, the instruction field is found to be empty (contents (0000)), flow will proceed to block 112 and the telephone will be rung. Then, at block 113, a check is made on the text field of the selected record. If the text field does not contain any information (i.e. 16xF(hex)) the telephone number stored in the numeric field of the selected record will be displayed on LCD 5, as indicated at block 114. Also, the record number will be displayed, e.g. in the form "RECORD 99", thus giving the user the maximum amount of information available, in the absence of text, which may help to identify the caller. Additionally the display will show a message indicating the number of times a call has been received from the same telephone number since the call counter was last cleared. This message may, for example, be in the form "CALL COUNT: 2", indicating that this is the second call which has been received from the number displayed. The three items of information, i.e. the CLI number, the record number, and the call count may be displayed simultaneously if the capacity of the display permits, or the various items of information may be displayed sequentially.

If, at block 113, the text field is found to contain information, then the flow proceeds to block 115 and the telephone will display the text stored in encoded form in the text field of the selected record, e.g. "TECHNOPHONE LTD", see Figure 4. Also, the CLI number viz. 0276 686116 in this case, may be displayed together with the call count, e.g. in the form "CALL COUNT: 2".

All of the information contained in the telephone number store 100 may be entered or programmed by the user from the keypad 6. For example, the store mode may be accessed by pressing the "STORE" key disposed among the keys 6b. The user then enters the desired telephone number up to 16 digits long using the alphanumeric keys 6a. To store the number the "STORE" key is pressed again. In response the display 5 will show the keyed telephone number e.g. 0276 686116, followed by the first available record or memory location, indicated for example as "RECORD 005", assuming records 001 through 004 are already assigned. The record number can be changed at this stage using the "#" key to scroll up to the next location (record 006), or using the "*" key to reach the previous location (record 004). Alternatively, the number keys 6a may be pressed to enter a specific location, e.g. by pressing the key "9" twice for record number 99. The "STORE" key is pressed to store the entered number at the desired location. The display then returns a prompt such as "ENTER NAME". At this stage the alphabet function of the numeric keys 6a is enabled. In general each number key has three sequential alphabetic characters associated therewith. For example the key "8" also has the letters "T" "U" and "V" associated with it. Thus, at the "ENTER NAME" stage, a single press of the numeric key will display the first letter (i.e. "T" for the "8" key), two key presses will display the second letter (i.e. "U" for the "8 key"), and three key presses will display the third letter (i.e. "V" for the "8" key). A fourth key press displays the number itself. Further key presses cause this sequence to be repeated. Hence upto 16 alphanumeric characters can be entered into the text field using the alphanumeric keys 6a. The text characters are stored by pressing the "STORE" key once again. If the "STORE" key is pressed before any text has been entered the text field will be left empty. Whether or not text has been entered the last "STORE" keypress will cause the display to show a further prompt such as "BUSY ON", indicating the status of the instruction in the instruction field. This instruction can be toggled between "BUSY ON" and "BUSY OFF" using for example either the "#" or "*" keys. As indicated above, "BUSY OFF" will store 0000 in the instruction field of the selected record permitting calls originating from that number to proceed in the normal manner, whereas "BUSY ON" will store 1111 in the instruction field of the selected record causing a busy or engaged signal whenever a call is received from the subscriber number stored in that record.

Pressing the "STORE" key once more will store all the data which has just been entered in the chosen location and the display will return to its normal state.

The user may at any time review what calls have been received using the "MENU" key. For example by pressing the "MENU" key followed by "5" the display may show the message "REVIEW CALLS". To enable this feature the user presses, for example, the "STORE" (or "ENTER") key. On the other hand by pressing the "#" or "*" keys the message toggles between "REVIEW CALLS" and "ERASE CALL COUNT". If the "STORE" (or "ENTER") key is pressed while the "ERASE CALL COUNT" message is displayed, the counter fields of all records will be reset to zero (0000). On the other hand if the "STORE" (or "ENTER") key is pressed while the "REVIEW CALLS" message is displayed, the display will show the first record which has a non-zero call count, for example: "0276 686116 TECHNOPHONE LTD CALL COUNT: 2". By pressing the "#" key the display will show the next record which has a non-zero call count. Successive records with a non-zero call count can thus be recalled by repeatedly pressing the "#" key. When all records with a non-zero call count have been displayed they will be displayed again in rotation as the "#" key is pressed repeatedly again. The non-zero call-count records can be reviewed in reverse order by pressing the "*" key.

In view of the foregoing it will be evident to a person skilled in the art that various modifications may be made within the scope of the present invention. For example the instruction stored in the instruction field may cause the power to the telephone to be switched off and so prevent the telephone from being used again until a correct code number, i.e. a personal identification number (PIN), has been entered. Alternatively, for example, the instruction may cause the keypad to be disabled until such time as the keypad is re-enabled by entering a predetermined sequence of key strokes. These features give an added degree of security since the telephone can be disabled remotely when the subscriber is away from the telephone and so prevent unauthorized use. As another example, the instruction may cause the call to be redirected to a different number, e.g. to a specified number selected from the telephone number store. Also, the telephone number store may be implemented and configured in any suitable manner and indeed the instruction field may be implemented in a memory physically distinct from the telephone number store. Furthermore, a telephone in accordance with the present invention need not necessarily include a call counter facility, in which case less memory space is required. Also, it is noted that the present invention is applicable to telephone apparatuses other than portable cellular telephones.

## Claims

1. A portable radio telephone (1) including means by which local user-interface functions of the telephone can be controlled remotely, the means comprising:
means adapted to respond to a signal conveying a number identifying a source of an incoming telephone call;
memory means (100) having a numeric field for storing a number in encoded form and an associated field for storing in encoded form an instruction relating to a local user-interface function;
means (4) for comparing the number stored in the numeric field with the number identifying the source of the incoming call; and
control circuitry (4) adapted, when the number identifying the source of the incoming call matches the number stored in the numeric field, to respond by modifying the operation of the local user-interface function in a manner dictated by the instruction in the associated field.

2. A telephone as in Claim 1, wherein the instruction causes the power to the telephone to be switched off.

3. A telephone as in Claim 1, wherein the instruction causes a keypad (6) of the telephone to be disabled.

4. A telephone as in any preceding claim, wherein the memory means (100) includes a plurality of the numeric fields, each having an associated field for storing in encoded form an instruction relating to a local user-interface function of the telephone.

5. A telephone as in Claim 3, wherein the keypad (6) of the telephone, when disabled, is adapted to be re-enabled by entering a predetermined sequence of key strokes via the keypad (6) of the telephone.

## Patentansprüche

1. Tragbares Funktelefon (1) mit Mitteln zur Fernsteuerung von Funktionen einer lokalen Benutzerschnittstelle des Telefons, wobei diese Mittel folgendes enthalten:
- Mittel zum Antworten auf ein Signal, das eine Nummer zur Identifizierung der Herkunft eines ankommenden Telefonanrufs übermittelt;
- Speichermittel (100) mit einem numerischen Feld zum Speichern einer Nummer in verschlüsselter Form und einem assoziierenden Feld zum Speichern einer verschlüsselten Anweisung, die sich auf eine Funktion der lokalen Benutzerschnittstelle bezieht;
- Mittel (4) zum Vergleich der im numerischen Feld gespeicherten Nummer mit der Nummer, die die Herkunft des ankommenden Anrufs identifiziert; und
- einen Kontrollkreis (4), der dann, wenn die Nummer, die die Herkunft des ankommenden Anrufs identifiziert, mit der Nummer übereinstimmt, die im numerischen Feld gespeichert ist, durch Abänderung der Wirkung der lokalen Benutzerschnittstellenfunktion auf eine Weise antwortet, die durch die Anweisung im assoziativen Feld vorgeschrieben ist.

2. Telefon nach Anspruch 1, bei dem die Anweisung veranlaßt, die Stromzufuhr des Telefons abzuschalten.

3. Telefon nach Anspruch 1, bei dem die Anweisung veranlaßt, die Tastenkonsole (6) des Telefons zu deaktivieren.

4. Telefon nach irgendeinem der vorangegangenen Ansprüche, bei dem die Speichermittel (100) eine Vielzahl von numerischen Feldern enthalten, wobei Jedes einzelne ein zugeordnetes Feld zur Speicherung einer codierten Anweisung enthält, die zu einer Funktion der lokalen Benutzerschnittstelle des Telefons gehört.

5. Telefon nach Anspruch 3, dessen Tastenkonsole (6). falls diese deaktiviert ist, durch Betätigen einer vorbestimmten Reihenfolge von Tasten der Tastenkonsole (6) wieder aktiviert werden kann.

## Revendications

1. Radiotéléphone portable (1) comportant un moyen par lequel des fonctions interface-utilisateur locales du téléphone peuvent être contrôlées à distance, le moyen comportant :
- un moyen adapté pour répondre à un signal transmettant un numéro identifiant la source d'un appel téléphonique de l'extérieur;
- un moyen de mémoire (100) ayant un champ numérique pour le stockage d'un numéro sous forme codée et un champ associé pour le stockage sous la forme codée d'une instruction relative à une fonction d'interface utilisateur locale;
- un moyen (4) pour comparer le numéro stocké dans le champ numérique avec le numéro identifiant la source de l'appel de l'extérieur; et
- des circuits de contrôle (4) adaptés, lorsque le numéro identifiant la source de l'appel de l'extérieur correspond au numéro stocké dans le champ numérique, pour répondre en modifiant l'opération de la fonction interface-utilisateur locale d'une manière dictée par l'instruction dans le champ associé.

2. Téléphone selon la revendication 1, dans lequel l'instruction provoque la coupure de l'alimentation de puissance du téléphone.

3. Téléphone selon la revendication 1, dans lequel l'instruction provoque la désactivation du clavier (6) du téléphone.

4. Téléphone selon l'une quelconque des revendications précédentes, dans lequel le moyen de mémoire (100) comporte une pluralité de champs numériques, chacun ayant un champ associé pour le stockage dans une forme codée d'une instruction relative à une fonction interface-utilisateur locale du téléphone.

5. Téléphone selon la revendication 3, dans lequel le clavier (6) du téléphone, lorsqu'il est désactivé, est adapté pour être réactivé en entrant une séquence prédéterminé de touches de clavier via le clavier (6) du téléphone.
